(19) Europäisches Patentamt / European Patent Office / Office européen des brevets

(11) **EP 4 761 163 A1**

(12) **EUROPEAN PATENT APPLICATION**
published in accordance with Art. 153(4) EPC

(43) Date of publication:
**17.06.2026 Bulletin 2026/25**

(21) Application number: **24851124.8**

(22) Date of filing: **09.08.2024**

(51) International Patent Classification (IPC):
**H04L 5/00** (2006.01)   **H04W 72/40** (2023.01)

(52) Cooperative Patent Classification (CPC):
**H04L 5/00; H04W 64/00; H04W 72/0453;**
**H04W 72/25; H04W 72/40**

(86) International application number:
**PCT/CN2024/111000**

(87) International publication number:
**WO 2025/031480 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 CN 202311009382**

(71) Applicant: **Datang Mobile Communications Equipment Co., Ltd.**
**Beijing 100085 (CN)**

(72) Inventors:
• **LI, Hui**
  **Beijing 100085 (CN)**
• **REN, Bin**
  **Beijing 100085 (CN)**
• **REN, Xiaotao**
  **Beijing 100085 (CN)**
• **DA, Ren**
  **Beijing 100085 (CN)**

(74) Representative: **Studio Torta S.p.A.**
**Via Viotti, 9**
**10121 Torino (IT)**

(54) **RESOURCE DETERMINATION METHOD AND APPARATUS, INFORMATION INDICATION METHOD AND APPARATUS, AND STORAGE MEDIUM**

(57)   A method for determining resource, a method for indicating information, an apparatus and a storage medium are provided. The method for determining resource includes: a terminal determining, based on an association relationship between control channel resources and sidelink Positioning Reference Signal (SL PRS) resources in a resource pool, a target control channel resource and/or a target SL PRS resource.

determining, based on an association relationship between control channel resources and sidelink Positioning Reference Signal (SL PRS) resources in a resource pool, a target control channel resource and/or a target SL PRS resource ⸺ 100

FIG. 1

EP 4 761 163 A1

## Description

## CROSS-REFERENCE TO RELATED APPLICATION

This application claims priority to Chinese Patent Application No. No. 202311009382.X filed on August 10, 2023, entitled "METHOD FOR DETERMINING RESOURCE AND APPRATUS, INFORMATION INDICATION METHOD AND APPRATUS, AND STORAGE MEDIUM", which is incorporated herein by reference in its entirety.

## TECHNICAL FIELD

The present disclosure relates to the field of wireless communication technologies, and more particularly to a method for determining resource, a method for indicating information, an apparatus and a storage medium.

## BACKGROUND

To support a positioning in a sidelink (SL) system, a reference signal for positioning, which is denoted as a sidelink positioning reference signal (SL PRS), needs to be introduced. In scenarios lacking of centralized network control for SL PRS resource allocation, collisions and interference may occur between the SL PRS resources of different terminals.

## SUMMARY

The present disclosure provides a method for determining resource and apparatus, a method for indicating information and apparatus, and a storage medium, so as to address the issue that collisions and interference may occur between SL PRS resources of different terminals.

In a first aspect, the present disclosure provides a method for determining resource, applied to a terminal, including:

determining, based on an association relationship between control channel resources and sidelink Positioning Reference Signal (SL PRS) resources in a resource pool, a target control channel resource and/or a target SL PRS resource.

In some embodiments, the association relationship between the control channel resources and the SL PRS resources in the resource pool includes:

a one-to-one correspondence between the control channel resources and the SL PRS resources in the resource pool; or,
a one-to-one correspondence between the control channel resources and SL PRS resource sets in the resource pool.

In some embodiments, the SL PRS resources are associated with frequency domain positions of the control channel resources; or, SL PRS resource sets are associated with frequency domain positions of the control channel resources.

In some embodiments, frequency domain positions of the control channel resources in the resource pool meet one or more of following:

the frequency domain positions of the control channel resources in the resource pool being uniformly distributed in a bandwidth of the resource pool; or frequency domain positions of the control channel resources in the resource pool being located at boundaries of frequency domain units.

In some embodiments, a quantity of the control channel resources in the resource pool is determined based on a quantity of the SL PRS resources in the resource pool or a quantity of SL PRS resource sets in the resource pool; or,
a quantity of the SL PRS resources in the resource pool or a quantity of SL PRS resource sets in the resource pool is determined based on a quantity of the control channel resources in the resource pool.

In some embodiments, the frequency domain positions of the control channel resources in the resource pool are respectively determined based on a quantity of resources in the resource pool, the bandwidth of the resource pool and a frequency domain start position of the resource pool.

The quantity of resources in the resource pool includes the quantity of SL PRS resources in the resource pool, the quantity of SL PRS resource sets in the resource pool, or the quantity of the control channel resources in the resource pool.

In some embodiments, the frequency domain positions of the control channel resources in the resource pool are respectively determined based on a first formula, and the first formula includes:

$$F(i) = F0 + i * \frac{BW}{N}; \ i = 0, 1, ..., N-1$$

where F(i) represents a frequency domain start position of a control channel resource i, F0 represents the frequency domain start position of the resource pool, BW represents the bandwidth of the resource pool, and N represents the quantity of resources in the resource pool.

In some embodiments, the method further includes: adjusting,
after determining the frequency domain start positions of the control channel resources respectively in the resource pool based on the first formula, the frequency domain start positions of the control channel resources in the resource pool respectively to boundaries of the frequency domain units.

In some embodiments, the adjusting the frequency domain start positions of the control channel resources in the resource pool respectively to boundaries of the frequency domain units includes:

adjusting a frequency domain start position of a first control channel resource in the resource pool to a closest boundary of a frequency domain unit to a frequency domain position of the first control channel resource; or,

determining a first frequency domain unit where a frequency domain position of a first control channel resource in the resource pool is located, and adjusting a frequency domain start position of the first control channel resource to a boundary of the first frequency domain unit.

In some embodiments, frequency domain positions of the control channel resources in the resource pool are determined based on frequency domain position indication information received.

In some embodiments, the frequency domain position indication information includes a bitmap, the bitmap is used to indicate frequency domain positions of N control channel resources in the resource pool, and N is the quantity of control channel resources in the resource pool.

In some embodiments, a length of the bitmap is equal to the quantity of frequency domain units in the resource pool, and each bit in the bitmap is used to indicate whether a frequency domain unit corresponding to the bit includes a control channel resource or does not include a control channel resource.

In some embodiments, when a first bit in the bitmap indicates that a second frequency domain unit corresponding to the first bit includes a control channel resource, the first bit is further used to indicate that a frequency domain start position of the control channel resource in the second frequency domain unit is located at a start boundary of the second frequency domain unit.

In some embodiments, the frequency domain position indication information includes frequency domain position information of N control channel resources in the resource pool, and N is the quantity of control channel resources in the resource pool.

In some embodiments, the frequency domain location information of the control channel resources includes one or more of following:

start subcarrier position information of the control channel resources, or

information of frequency domain units where the control channel resources are located.

In a second aspect, the present disclosure further provides a method for indicating information, including:

sending frequency domain position indication information to a terminal, where the frequency domain position indication information is used to indicate frequency domain positions of control channel resources in the resource pool.

In some embodiments, the frequency domain position indication information includes a bitmap, the bitmap is used to indicate frequency domain positions of N control channel resources in the resource pool, and N is the quantity of control channel resources in the resource pool.

In some embodiments, a length of the bitmap is equal to the quantity of frequency domain units in the resource pool, and each bit in the bitmap is used to indicate whether a frequency domain unit corresponding to the bit includes a control channel resource or does not include a control channel resource.

In some embodiments, when a first bit in the bitmap indicates that a second frequency domain unit corresponding to the first bit includes a control channel resource, the first bit is further used to indicate that a frequency domain start position of the control channel resource in the second frequency domain unit is located at a start boundary of the second frequency domain unit.

In some embodiments, the frequency domain position indication information includes frequency domain position information of N control channel resources in the resource pool, and N is the quantity of control channel resources in the resource pool.

In some embodiments, the frequency domain location information of the control channel resources includes one or more of following:

start subcarrier position information of the control channel resources, or

information of frequency domain units where the control channel resources are located.

In a third aspect, the present disclosure further provides a terminal, including: a memory, a transceiver and a processor, where,

the memory is configured to store a computer program; the transceiver is configured to transmit and receive data under the control of the processor; the processor is configured to read the computer program in the memory to perform the following operations:

determining, based on an association relationship between control channel resources and sidelink Positioning Reference Signal (SL PRS) resources in a resource pool, a target control channel resource and/or a target SL PRS resource.

In some embodiments, the association relationship between the control channel resources and the SL PRS resources in the resource pool includes:

a one-to-one correspondence between the control channel resources and the SL PRS resources in the resource pool; or,
a one-to-one correspondence between the control channel resources and SL PRS resource sets in the resource pool.

In some embodiments, the SL PRS resources are associated with frequency domain positions of the control channel resources; or, SL PRS resource sets are associated with frequency domain positions of the control channel resources.

In some embodiments, frequency domain positions of the control channel resources in the resource pool meet one or more of following:

the frequency domain positions of the control channel resources in the resource pool being uniformly distributed in a bandwidth of the resource pool; or frequency domain positions of the control channel resources in the resource pool being located at boundaries of frequency domain units.

In some embodiments, a quantity of the control channel resources in the resource pool is determined based on a quantity of the SL PRS resources in the resource pool or a quantity of SL PRS resource sets in the resource pool; or,
a quantity of the SL PRS resources in the resource pool or a quantity of SL PRS resource sets in the resource pool is determined based on a quantity of the control channel resources in the resource pool.

In some embodiments, the frequency domain positions of the control channel resources in the resource pool are respectively determined based on a quantity of resources in the resource pool, the bandwidth of the resource pool and a frequency domain start position of the resource pool.

The quantity of resources in the resource pool includes the quantity of SL PRS resources in the resource pool, the quantity of SL PRS resource sets in the resource pool, or the quantity of the control channel resources in the resource pool.

In some embodiments, the frequency domain positions of the control channel resources in the resource pool are respectively determined based on a first formula, and the first formula includes:

$$F(i) = F0 + i * \frac{BW}{N}; \; i = 0, 1, \ldots, N - 1$$

where F(i) represents a frequency domain start position of a control channel resource i, F0 represents the frequency domain start position of the resource pool, BW represents the bandwidth of the resource pool, and N represents the quantity of resources in the resource pool.

In some embodiments, the operations further include:
adjusting, after determining the frequency domain start positions of the control channel resources respectively in the resource pool based on the first formula, the frequency domain start positions of the control channel resources in the resource pool respectively to boundaries of the frequency domain units.

In some embodiments, the adjusting the frequency domain start positions of the control channel resources in the resource pool respectively to boundaries of the frequency domain units includes:

adjusting a frequency domain start position of a first control channel resource in the resource pool to a closest boundary of a frequency domain unit to a frequency domain position of the first control channel resource; or,
determining a first frequency domain unit where a frequency domain position of a first control channel resource in the resource pool is located, and adjusting a frequency domain start position of the first control channel resource to a boundary of the first frequency domain unit.

In some embodiments, frequency domain positions of the control channel resources in the resource pool are determined based on received frequency domain position indication information.

In some embodiments, the frequency domain position indication information includes a bitmap, the bitmap is used to indicate frequency domain positions of N control channel resources in the resource pool, and N is the quantity of control channel resources in the resource pool.

In some embodiments, a length of the bitmap is equal to the quantity of frequency domain units in the resource pool, and each bit in the bitmap is used to indicate whether a frequency domain unit corresponding to the bit includes a control channel resource or does not include a control channel resource.

In some embodiments, when a first bit in the bitmap indicates that a second frequency domain unit corresponding to the first bit includes a control channel resource, the first bit is further used to indicate that a frequency domain start position of the control channel resource in the second frequency domain unit is located at a start boundary of the second frequency domain unit.

In some embodiments, the frequency domain position indication information includes frequency domain position information of N control channel resources in the resource pool, and N is the quantity of control channel resources in the resource pool.

In some embodiments, the frequency domain location information of the control channel resources includes one or more of following:

start subcarrier position information of the control channel resources; or
information of frequency domain units where the control channel resources are located.

In a fourth aspect, the present disclosure further provides a communication device, including a memory, a transceiver and a processor.

The memory is configured to store a computer program, the transceiver is configured to transmit and receive data under the control of the processor, and the processor is configured to read the computer program in the memory to perform the following operations:

sending frequency domain position indication information to a terminal, where the frequency domain position indication information is used to indicate frequency domain positions of control channel resources in the resource pool.

In some embodiments, the frequency domain position indication information includes a bitmap, the bitmap is used to indicate frequency domain positions of N control channel resources in the resource pool, and N is the quantity of control channel resources in the resource pool.

In some embodiments, a length of the bitmap is equal to the quantity of frequency domain units in the resource pool, and each bit in the bitmap is used to indicate whether a frequency domain unit corresponding to the bit includes a control channel resource or does not include a control channel resource.

In some embodiments, when a first bit in the bitmap indicates that a second frequency domain unit corresponding to the first bit includes a control channel resource, the first bit is further used to indicate that a frequency domain start position of the control channel resource in the second frequency domain unit is located at a start boundary of the second frequency domain unit.

In some embodiments, the frequency domain position indication information includes frequency domain position information of N control channel resources in the resource pool, and N is the quantity of control channel resources in the resource pool.

In some embodiments, the frequency domain location information of the control channel resources includes one or more of following:

start subcarrier position information of the control channel resources; or
information of frequency domain units where the control channel resources are located.

In a fifth aspect, the present disclosure further provides an apparatus for determining resource, including:

a determining unit, configured to determine, based on an association relationship between control channel resources and sidelink Positioning Reference Signal (SL PRS) resources in a resource pool, a target control channel resource and/or a target SL PRS resource.

In some embodiments, the association relationship between the control channel resources and the SL PRS resources in the resource pool includes:

a one-to-one correspondence between the control channel resources and the SL PRS resources in the resource pool; or,
a one-to-one correspondence between the control channel resources and SL PRS resource sets in the resource pool.

In some embodiments, the SL PRS resources are associated with frequency domain positions of the control channel resources; or, SL PRS resource sets are associated with frequency domain positions of the control channel resources.

In some embodiments, frequency domain positions of the control channel resources in the resource pool meet one or more of following:

the frequency domain positions of the control channel resources in the resource pool being uniformly distributed in a bandwidth of the resource pool; or
frequency domain positions of the control channel resources in the resource pool being located at boundaries of frequency domain units.

In some embodiments, a quantity of the control channel resources in the resource pool is determined based on a quantity of the SL PRS resources in the resource pool or a quantity of SL PRS resource sets in the resource pool; or,
a quantity of the SL PRS resources in the resource pool or a quantity of SL PRS resource sets in the resource pool is determined based on a quantity of the control channel resources in the resource pool.

In some embodiments, the frequency domain positions of the control channel resources in the resource pool are respectively determined based on a quantity of resources in the resource pool, the bandwidth of the resource pool and a frequency domain start position of the resource pool.

The quantity of resources in the resource pool includes the quantity of SL PRS resources in the resource pool, the quantity of SL PRS resource sets in the resource pool, or the quantity of the control channel resources in the resource pool.

In some embodiments, the frequency domain positions of the control channel resources in the resource pool are respectively determined based on a first formula, and the first formula includes:

$$F(i) = F0 + i * \frac{BW}{N}; \ i = 0, 1, ..., N - 1$$

where F(i) represents a frequency domain start position of a control channel resource i, F0 represents the frequency domain start position of the resource pool, BW represents the bandwidth of the resource pool, and N represents the quantity of resources in the resource pool.

In some embodiments, the apparatus further includes:

an adjusting unit, configured to adjust, after determining the frequency domain start positions of the control channel resources respectively in the resource pool based on the first formula, the frequency domain start positions of the control channel resources in the resource pool respectively to boundaries of the frequency domain units.

In some embodiments, adjusting the frequency domain start positions of the control channel resources in the resource pool respectively to boundaries of the frequency domain units includes:

adjusting a frequency domain start position of a first control channel resource in the resource pool to a closest boundary of a frequency domain unit to a frequency domain position of the first control channel resource; or,

determining a first frequency domain unit where a frequency domain position of a first control channel resource in the resource pool is located, and adjusting a frequency domain start position of the first control channel resource to a boundary of the first frequency domain unit.

In some embodiments, frequency domain positions of the control channel resources in the resource pool are determined based on received frequency domain position indication information.

In some embodiments, the frequency domain position indication information includes a bitmap, the bitmap is used to indicate frequency domain positions of N control channel resources in the resource pool, and N is the quantity of control channel resources in the resource pool.

In some embodiments, a length of the bitmap is equal to the quantity of frequency domain units in the resource pool, and each bit in the bitmap is used to indicate whether a frequency domain unit corresponding to the bit includes a control channel resource or does not include a control channel resource.

In some embodiments, when a first bit in the bitmap indicates that a second frequency domain unit corresponding to the first bit includes a control channel resource, the first bit is further used to indicate that a frequency domain start position of the control channel resource in the second frequency domain unit is located at a start boundary of the second frequency domain unit.

In some embodiments, the frequency domain position indication information includes frequency domain position information of N control channel resources in the resource pool, and N is the quantity of control channel resources in the resource pool.

In some embodiments, the frequency domain location information of the control channel resources includes one or more of following:

start subcarrier position information of the control channel resources; or

information of frequency domain units where the control channel resources are located.

In a sixth aspect, the present disclosure further provides an apparatus for indicating information, including

a sending unit, configured to transmit frequency domain position indication information to a terminal, where the frequency domain position indication information is used to indicate frequency domain positions of control channel resources in the resource pool.

In some embodiments, the frequency domain position indication information includes a bitmap, the bitmap is used to indicate frequency domain positions of N control channel resources in the resource pool, and N is the quantity of control channel resources in the resource pool.

In some embodiments, a length of the bitmap is equal to the quantity of frequency domain units in the resource pool, and each bit in the bitmap is used to indicate whether a frequency domain unit corresponding to the bit includes a control channel resource or does not include a control channel resource.

In some embodiments, when a first bit in the bitmap indicates that a second frequency domain unit corresponding to the first bit includes a control channel resource, the first bit is further used to indicate that a frequency domain start position of the control channel resource in the second frequency domain unit is located at a start boundary of the second frequency domain unit.

In some embodiments, the frequency domain position indication information includes frequency domain position information of N control channel resources in the resource pool, and N is the quantity of control channel resources in the resource pool.

In some embodiments, the frequency domain location information of the control channel resources includes one or more of following:

start subcarrier position information of the control channel resources, or

information of frequency domain units where the control channel resources are located.

In the seventh aspect, the present disclosure further provides a non-transitory readable storage medium, the non-transitory readable storage medium stores a computer program, and the computer program is configured to cause a processor to perform the method for determining resource in the above-mentioned first aspect, or perform the information indication method in the above-mentioned second aspect.

In an eighth aspect, the present disclosure further provides a communication device, in which a computer program is stored, and the computer program is configured to cause the communication device to execute the method for determining resource in the above-mentioned first aspect, or execute the information indication method in the above-mentioned second aspect.

In a ninth aspect, the present disclosure further provides a processor-readable storage medium, on which a computer program is stored, and the computer program is configured to cause a processor to execute the method for determining resource in the above-mentioned first aspect, or to execute the information indication method in the above-mentioned second aspect.

In the tenth aspect, the present disclosure further provides a chip product, in which a computer program is stored, and the computer program is configured to cause the chip product to execute the method for determining resource in the above-mentioned first aspect, or execute the information indication method in the above-mentioned second aspect.

In the method for determining resource and apparatus, information indication method and apparatus, and storage medium of the present disclosure, the terminal may determine the target control channel resource and/or the target SL PRS resource through the association relationship between the control channel resources and the SL PRS resources, thereby effectively avoiding collision and interference between the SL PRS resources of different terminals.

**BRIEF DESCRIPTION OF THE DRAWINGS**

In order to illustrate the technical solutions of the embodiments of the present disclosure in a clearer manner, the drawings required for the description of the embodiments or the related technologies will be described hereinafter briefly. Apparently, the following drawings merely relate to some embodiments of the present disclosure, and based on these drawings, a person of ordinary skill in the art may obtain other drawings without any creative effort.

FIG. 1 is a flow chart of a method for determining resource according to the embodiments of the present disclosure;
FIG. 2 is a first exemplary diagram of a structure of a dedicated resource pool according to the embodiments of the present disclosure;
FIG. 3 is a second exemplary diagram of the structure of the dedicated resource pool according to the embodiments of the present disclosure;
FIG. 4 is a third exemplary diagram of the structure of the dedicated resource pool according to the embodiments of the present disclosure;
FIG. 5 is a fourth exemplary diagram of the structure of the dedicated resource pool according to the embodiments of the present disclosure;
FIG. 6 is a flow chart of a method for indicating information according to the embodiments of the present disclosure;
FIG. 7 is a schematic structural diagram of a terminal according to the embodiments of the present disclosure;
FIG. 8 is a schematic structural diagram of a communication device according to the embodiments of the present disclosure;
FIG. 9 is a schematic structural diagram of an apparatus for determining resource according to the embodiments of the present disclosure; and
FIG. 10 is a schematic structural diagram of an apparatus for indicating information according to the embodiments of the present disclosure.

**DETAILED DESCRIPTION**

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that the associated objects before and after the character is in an "or" relationship.

The term "multiple" in the embodiments of the present disclosure refers to two or more than two, the similar applies to other quantifiers.

Terms such as "first" and "second" in the embodiments of the present disclosure are used to distinguish similar objects and are not used to describe a specific order or sequence. It should be appreciated that the terms used in this way may be interchanged under appropriate circumstances, so that the embodiments of the present disclosure described herein may be implemented in a sequence other than those illustrated or described herein. Moreover, the objects distinguished by "first" and "second" are generally of the same type, and the quantity of objects is not particularly defined herein. For example, there may be one or more first objects.

The technical solutions in the embodiments of the present disclosure will be described hereinafter in a clear and thorough manner with reference to the drawings of the embodiments of the present disclosure. Apparently, the following embodiments merely relate to a part of, rather than all of, the embodiments of the present disclosure. All other embodiments obtained by a person ordinary skilled in the art based on the embodiments of the present disclosure without any creative efforts fall within the scope of the present disclosure.

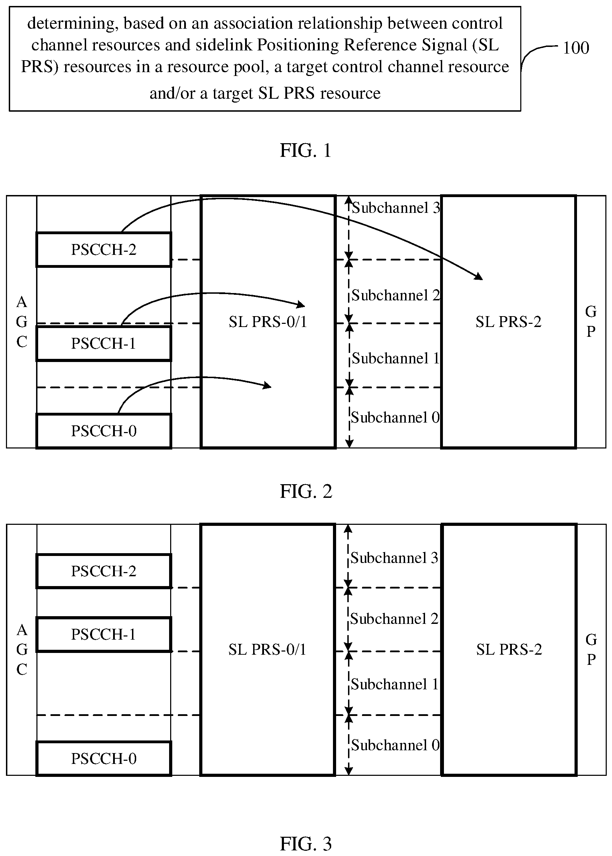

FIG. 1 is a flow chart of a method for determining resource according to the embodiments of the present disclosure. The method may be applied to a terminal. As shown in FIG. 1, the method includes the following steps.

Step 100, determining, based on an association relationship between control channel resources and sidelink Positioning Reference Signal (SL PRS) resources in a resource pool, a target control channel resource and/or a target SL PRS resource.

Specifically, the resource pool in the present disclosure may be a dedicated resource pool for SL positioning. The dedicated resource pool for positioning only includes control channel resources and SL PRS resources, and the control channel resources are used to transmit sidelink control information (SCI).

The control channel resources may include a physical sidelink control channel (PSCCH) resource and/or a SCI resource. In some embodiments, the SCI resource may be the PSCCH resource.

The resource pool may include control channel resources and SL PRS resources. There is a certain association relationship (or mapping relationship) between the control channel resources and the SL PRS resources, so that the terminal may determine the target control channel resource and/or target SL PRS resource based on the association relationship between the control channel resources and the SL PRS resources in the resource pool.

The target control channel resource may be any control channel resource, or a control channel resource associated with one or more SL PRS resources/SL PRS resource sets.

The target SL PRS resource may be any SL PRS resource, or a SL PRS resource associated with one or more control channel resources.

In some embodiments, a terminal may, when a control channel resource is known, determine a SL PRS resource associated with the known control channel resource based on an association relationship between control channel resources and SL PRS resources in a resource pool. In some embodiments, the terminal may, when a SL PRS resource is known, determine a control channel resource associated with the known SL PRS resource based on the association relationship between control channel resources and SL PRS resources in the resource pool. In some embodiments, the terminal may determine a control channel resource and a SL PRS resource that are associated with each other based on the association relationship between control channel resources and SL PRS resources in the resource pool.

For example, it is assumed that the terminal detects SCI on a PSCCH resource, the terminal may determine a SL PRS resource associated with the PSCCH resource or the SCI based on the association relationship between the control channel resources and the SL PRS resources in the resource pool.

For example, it is assumed that a SL PRS resource is indicated in a resource allocation indication received by the terminal, the terminal may determine a PSCCH resource associated with the SL PRS resource based on the association relationship between the control channel resources and the SL PRS resources in the resource pool, and use the PSCCH resource to transmit SCI to other terminals to indicate the SL PRS resource.

For example, the terminal may determine a control channel resource and a SL PRS resource that are associated with each other based on the association relationship between the control channel resources and the SL PRS resources in the resource pool, and when indicating the SL PRS resource to other terminals, use the associated PSCCH resource to transmit SCI to other terminals.

As can be appreciated, the method in the present disclosure is not limited to the above-mentioned scenarios, and may be applied to other scenarios that need to determine the target control channel resource and/or target SL PRS resource, which will not be elaborated again. It may be used for a variety of SL positioning technologies.

In some embodiments, the association relationship between the control channel resources and the SL PRS resources in the resource pool may be predefined, indicated by a network side, preconfigured, or determined in other manners, which will not be particularly defined herein.

In the method for determining resource of the embodiments of the present disclosure, the terminal may determine the target control channel resource and/or the target SL PRS resource through the association relationship between the control channel resources and the SL PRS resources, thereby effectively avoiding collision and interference between the SL PRS resources of different terminals.

In some embodiments, the association relationship between the control channel resources and the SL PRS resources in the resource pool includes:

a one-to-one correspondence between the control channel resources and the SL PRS resources in the resource pool, or,
a one-to-one correspondence between the control channel resources and SL PRS resource sets in the resource pool.

For example, the one-to-one correspondence between the control channel resources and the SL PRS resources in the resource pool may be a one-to-one correspondence between control channel resources and SL PRS resources with same numbers in the resource pool. For example, control channel resource i corresponds to SL PRS resource i, where i is a resource number. It may be any other one-to-one correspondence, which is not particularly defined in the present disclosure, such as a one-to-one correspondence between frequency domain positions and numbers.

For example, the one-to-one correspondence between the control channel resources in the resource pool and the SL PRS resource sets may be a one-to-one correspondence between control channel resources and SL PRS resource sets with same numbers in the resource pool. For example, control channel resource j corresponds to SL PRS resource set j, where j is the number of a resource or resource set. It may be any other one-to-one correspondence, which is not particularly defined in the present disclosure, such as a one-to-one correspondence between frequency domain positions and numbers.

In some embodiments, the SL PRS resources are associated with frequency domain positions of the control channel resources, or, SL PRS resource sets are associated with frequency domain positions of the control channel resources.

For example, the SL PRS resource may be associated with a frequency domain start/end/center position of the control channel resource, or the SL PRS resource set may be associated with a frequency domain start/end/center position of the control channel resource.

In the embodiments of the present disclosure, the frequency domain position of the control channel resource in the resource pool may be determined by one or more of a predefined rule, a system pre-configuration, or a signaling indication.

In some embodiments, frequency domain positions of the control channel resources in the resource pool meet one or more of following.

(1) the frequency domain positions of the control channel resources in the resource pool being uniformly distributed in a bandwidth of the resource pool.

For example, frequency domain start/end/center positions of the control channel resources may be uniformly distributed in the bandwidth of the resource pool.

(2) frequency domain positions of the control channel resources in the resource pool being located at boundaries of frequency domain units.

The frequency domain unit may include a subchannel, a physical resource block (PRB), and any other unit divided in the frequency domain, which is not particularly defined. This concept is consistent throughout the entire text, and will not be elaborated again hereinafter.

In the present disclosure, the boundary of the frequency domain unit refers to a start position or end position of the frequency domain unit in the frequency domain. The start position of the frequency domain unit in the frequency domain (i.e., the frequency domain start position of the frequency domain unit) may be referred to as a start boundary of the frequency domain unit, and the end position of the frequency domain unit in the frequency domain (i.e., the frequency domain end position of the frequency domain unit) may be referred to as an end boundary of the frequency domain unit.

The frequency domain position of the control channel resource is located at the boundary of the frequency domain unit, which may be understood as a specific frequency domain position of the control channel resource (such as the frequency domain start position, the frequency domain end position, the frequency domain center position, etc.) is aligned with the boundary (the start boundary or the end boundary) of the frequency domain unit.

For example, the frequency domain start position of the control channel resource may be located at a start boundary of a subchannel, or the frequency domain start position of the control channel resource may be located at a start boundary of a PRB, or the frequency domain start position of the control channel resource may be located at an end boundary of the subchannel, and so on.

In some embodiments, a quantity of the control channel resources in the resource pool is determined based on a quantity of the SL PRS resources in the resource pool or a quantity of SL PRS resource sets in the resource pool; or,

a quantity of the SL PRS resources in the resource pool or a quantity of SL PRS resource sets in the resource pool is determined based on a quantity of the control channel resources in the resource pool.

For example, in the case where control channel resources are in one-to-one correspondence with SL PRS resources, the quantity of control channel resources is equal to the quantity of SL PRS resources. In the case where control channel resources are in one-to-one correspondence with SL PRS resource sets, the quantity of control channel resources is equal to the quantity of SL PRS resource sets.

In some embodiments, the frequency domain positions of the control channel resources in the resource pool are respectively determined based on a quantity of resources in the resource pool, the bandwidth of the resource pool and a frequency domain start position of the resource pool.

The quantity of resources in the resource pool includes the quantity of SL PRS resources in the resource pool, the quantity of SL PRS resource sets in the resource pool, or the quantity of the control channel resources in the resource pool.

Specifically, when determining the frequency domain position of the control channel resource, it may be determined based on such information as the quantity of resources in the resource pool, the bandwidth of the resource pool, and the frequency domain start position of the resource pool. The quantity of resources in the resource pool may be the quantity of SL PRS resources in the resource pool, the quantity of SL PRS resource sets in the resource pool, or the quantity of control channel resources in the resource pool, which is not particularly defined herein.

For example, when the frequency domain positions of the control channel resources in the resource pool are uniformly distributed in the bandwidth of the resource pool, the frequency domain position of each control channel resource may be determined based on the bandwidth of the resource pool, the frequency domain start position of the resource pool, and the quantity of control channel resources in the resource pool.

In some embodiments, the frequency domain positions of the control channel resources in the resource pool are respectively determined based on a first formula, and the first formula includes:

$$F(i) = F0 + i * \frac{BW}{N}; \ i = 0, 1, ..., N - 1$$

where F(i) represents a frequency domain start position of a control channel resource i, F0 represents the frequency domain start position of the resource pool, BW represents the bandwidth of the resource pool, and N represents the quantity of resources in the resource pool.

In some embodiments, the method further includes:

adjusting, after determining the frequency domain start positions of the control channel resources respectively in the resource pool based on the first formula, the frequency domain start positions of the control channel resources in the resource pool respectively to boundaries of the frequency domain units.

Specifically, after uniformly distributing the frequency domain start positions of the control channel resources in the bandwidth of the resource pool, the frequency domain start positions of the control channel resources may be further adjusted such that the frequency domain start positions of the control channel resources are located at the boundaries of frequency domain units (e.g., boundaries of subchannels or PRBs).

In some embodiments, the adjusting the frequency domain start positions of the control channel resources in the resource pool respectively to boundaries of the frequency domain units includes:

adjusting a frequency domain start position of a first control channel resource in the resource pool to a closest boundary of a frequency domain unit to a frequency domain position of the first control channel resource; or,

determining a first frequency domain unit where a frequency domain position of a first control channel resource in the resource pool is located, and adjusting a frequency domain start position of the first control channel resource to a boundary of the first frequency domain unit.

Specifically, there may be one or more first control channel resources, and the first control channel resource may be any control channel resource in the resource pool. In some embodiments, it may be a control channel resource in the resource pool whose frequency domain start position is not at a boundary of a frequency domain unit.

In some embodiments, for a first control channel resource, a closest boundary of a frequency domain unit to its frequency domain position (which may be a frequency domain start/end/center position) may be determined first, and then its frequency domain start position is aligned with the closest boundary of the frequency domain unit.

In some embodiments, for a first control channel resource, a frequency domain unit (e.g., subchannel or PRB) in which the first control channel resource is located, i.e., the first frequency domain unit, may be determined first, and then a frequency domain start position of the first control channel resource may be aligned with a boundary (which may be a start boundary or an end boundary) of the first frequency domain unit. The first frequency domain unit may be a frequency domain unit in which a frequency domain start position of the first control channel resource is located, or may be a frequency domain unit in which a frequency domain center position of the first control channel resource is located, or may be a frequency domain unit in which all frequency domain positions of the first control channel resource are located, and so on, which are not particularly defined herein.

In some embodiments, frequency domain positions of the control channel resources in the resource pool are determined based on received frequency domain position indication information.

Specifically, in the case where the signaling indicates the frequency domain positions of the control channel resources, other communication devices (such as a network device, a head terminal in a sidelink system, etc.) may transmit frequency domain position indication information to the terminal, and the frequency domain position indication information may be used to indicate the frequency domain positions of the control channel resources in the resource pool. Hence, after the terminal receives the frequency domain position indication information, it may determine the frequency domain positions of the control channel resources in the resource pool according to the frequency domain position indication information.

In some embodiments, the frequency domain position indication information includes a bitmap, the bitmap is used to indicate frequency domain positions of N control channel resources in the resource pool, and N is the quantity of control channel resources in the resource pool.

Specifically, the frequency domain position indication information may be in the form of a bitmap, and the frequency domain positions of the N control channel resources in the resource pool are indicated by multiple bits in the bitmap.

For example, other communication devices may determine the quantity N of control channel resources in the resource pool, and indicate the frequency domain positions of the N control channel resources to the terminal through a bitmap. For another example, other communication devices may determine the quantity N of control channel resources in the resource pool based on the quantity of SL PRS resources in the resource pool, and indicate the frequency domain positions of the N control channel resources to the terminal through a bitmap.

In some embodiments, a length of the bitmap is equal to the quantity of frequency domain units in the resource pool, and each bit in the bitmap is used to indicate whether a frequency domain unit corresponding to the bit includes a control channel resource or does not include a control channel resource.

For example, it is assumed that a length of a bitmap is equal to the quantity of subchannels in the resource pool, and the resource pool includes 4 subchannels, the length of the bitmap is 4. A subchannel including a control channel resource is denoted by 1, and the subchannel without a control channel resource is denoted by 0. Correspondingly, a bit with a value of 1 in the bitmap indicates that a frequency domain unit corresponding to the bit includes a control channel resource, and the bit with a value of 0 in the bitmap indicates that the frequency domain unit corresponding to the bit does not include a control channel resource.

In some embodiments, when a first bit in the bitmap indicates that a second frequency domain unit corresponding to the first bit includes a control channel resource, the first bit is further used to indicate that a frequency domain start position of the control channel resource in the second frequency domain unit is located at a start boundary of the second frequency domain unit.

For example, it is assumed that the resource pool includes 4 subchannels, a subchannel with a control channel resource is denoted by 1, and a subchannel without a control channel resource is denoted by 0. A bitmap of "1011" is used to indicate that subchannel 0, subchannel 2 and subchannel 3 each include a control channel resource. The terminal may determine that three control channel resources in the resource pool are located in subchannel 0, subchannel 2 and subchannel 3 respectively according to the bit map, and further determine that a frequency domain start position of each control channel resource is aligned with a start boundary of the subchannel where each control channel resource is located.

In some embodiments, the frequency domain position indication information includes frequency domain position information of N control channel resources in the resource pool, and N is the quantity of control channel resources in the resource pool.

Specifically, the frequency domain position indication information may indicate specific information of the frequency domain position of each control channel resource in the N control channel resources in the resource pool, such as a frequency domain start position, a frequency domain end position, a frequency domain width, and the like.

In some embodiments, the frequency domain location information of the control channel resources includes one or more of following:

    start subcarrier position information of the control channel resources, or
    information of frequency domain units where the control channel resources are located.

For example, a start subcarrier position of each of the N control channel resources may be indicated, e.g.,

a start subcarrier position of control channel resource 0 is indicated as $F_0$, a start subcarrier position of control channel resource 1 is indicated as $F_1$, and so on. For another example, a subchannel where each of the N control channel resources is located (or a start subchannel of the control channel resource) may be indicated, or a PRB where each of the N control channel resources is located (or a start PRB of the control channel resource) may be indicated, and so on.

In some embodiments, when the frequency domain unit where the control channel resource is located is indicated, the terminal may align the frequency domain start position of each control channel resource with a start boundary of the frequency domain unit.

In some embodiments, when a start frequency domain unit of the control channel resource is indicated, the terminal may align the frequency domain start position of each control channel resource with a start boundary of the start frequency domain unit.

The following provides illustrative examples of the method in the above embodiments of the present disclosure through specific application scenarios.

Example 1: Frequency domain locations of control channel resources are uniformly distributed in a bandwidth of a resource pool.

FIG. 2 is a first exemplary diagram of a structure of a dedicated resource pool according to the embodiments of the present disclosure. As shown in FIG. 2, the terminal is pre-configured with the dedicated resource pool for SL positioning. FIG. 2 illustrates the structure of PSCCH resources and SL PRS resources in one time slot, where each SL PRS resource occupies the entire bandwidth of the resource pool. It includes N PSCCH resources and N SL PRS resources, where N=3. AGC stands for Automatic Gain Control, and GP stands for Guard Period. The bandwidth of the dedicated resource pool is M=4 subchannels, namely, subchannel 0, subchannel 1, subchannel 2, and subchannel 3 as shown in FIG. 2.

A system predefines that, in one time slot, PSCCH resources and SL PRS resources have a one-to-one correspondence. One approach is that PSCCH resources and SL PRS resources with the same numbers have a one-to-one correspondence, i.e., PSCCH resource i is associated with SL PRS resource i, where i = 0, 1, ..., N-1. According to a predefined rule of the system, N PSCCH resources are uniformly distributed in the bandwidth of the resource pool, and a frequency domain start position of PSCCH resource i is:

$$F0 + i * BW/N$$

where BW is the bandwidth of the dedicated resource pool, N is the quantity of resources in the resource pool, and F0 is a frequency domain start position of the dedicated resource pool.

The terminal determines the quantity N of SL PRS resources in one time slot according to configuration information of the dedicated resource pool. According to the predefined rule, the frequency domain positions of the N PSCCH resources are determined. The terminal obtains SCI through blind detection on the PSCCH resources. It is assumed that the terminal detects SCI in PSCCH resource 1, and determines that the associated resource is SL PRS resource 1, and the SCI is used for scheduling SL PRS resource 1.

Example 2: Frequency domain positions of control channel resources are located at boundaries of frequency domain units.

FIG. 3 is a second exemplary diagram of the structure of the dedicated resource pool according to the embodiments of the present disclosure. As shown in FIG. 3, the terminal is pre-configured with the dedicated resource pool for SL positioning. FIG. 3 illustrates the structure of PSCCH resources and SL PRS resources in one time slot. It includes N PSCCH resources and N SL PRS resources, where N=3. AGC stands for Automatic Gain Control, and GP stands for Guard Period. A bandwidth of the dedicated resource pool is M=4 subchannels, namely, subchannel 0, subchannel 1, subchannel 2, and subchannel 3 as shown in FIG. 3.

A system predefines that, in one time slot, PSCCH resources and SL PRS resources have a one-to-one correspondence. Namely, PSCCH resource i is associated with SL PRS resource i, where i = 0, 1, ..., N-1. According to a predefined rule of the system, the distribution of the N PSCCH resources in the bandwidth of the resource pool is determined by the following two steps.

Step 1, the unadjusted frequency domain start position of PSCCH resource i is:

$$F0 + i * BW/N$$

where BW is the bandwidth of the dedicated resource pool, N is the quantity of SL-PRS resources included in this time slot, and F0 is a frequency domain start position of the dedicated resource pool.

Step 2, the unadjusted frequency domain start position of PSCCH resource i in Step 1 is adjusted to a boundary of a subchannel. One implementation is that the system stipulates adjustment to a closest boundary of a subchannel, which may be a frequency domain junction between any two adjacent subchannels, or a start boundary of a start subchannel (such as subchannel 0 in FIG. 3) in the bandwidth of the resource pool. For example, there is a frequency domain junction between subchannel 0 and subchannel 1 in FIG. 3, which serves as an end boundary of subchannel 0 and a start boundary of subchannel 1 simultaneously. As shown in FIG. 3, PSCCH resource 1 is adjusted to a start boundary of subchannel 2, and PSCCH resource 2 is adjusted to a start boundary of subchannel 3. Another implementation is determined according to a calculation rule stipulated by the system.

For instance, according to the result from Step 1, the subchannel where the PSCCH resource is located is determined, and the PSCCH resource is moved to a boundary of this subchannel (which may be a start boundary or an end boundary of the subchannel).

The terminal determines the quantity N of SL PRS resources in one time slot according to configuration information of the dedicated resource pool. According to the predefined rule, the frequency domain positions of the N PSCCH resources are determined. The terminal obtains SCI through blind detection on the PSCCH resources. It is assumed that the terminal detects SCI in PSCCH resource 1, and determines that the associated resource is SL PRS resource 1, and the SCI is used for scheduling SL PRS resource 1.

Example 3: A bitmap indicates frequency domain locations of control channel resources.

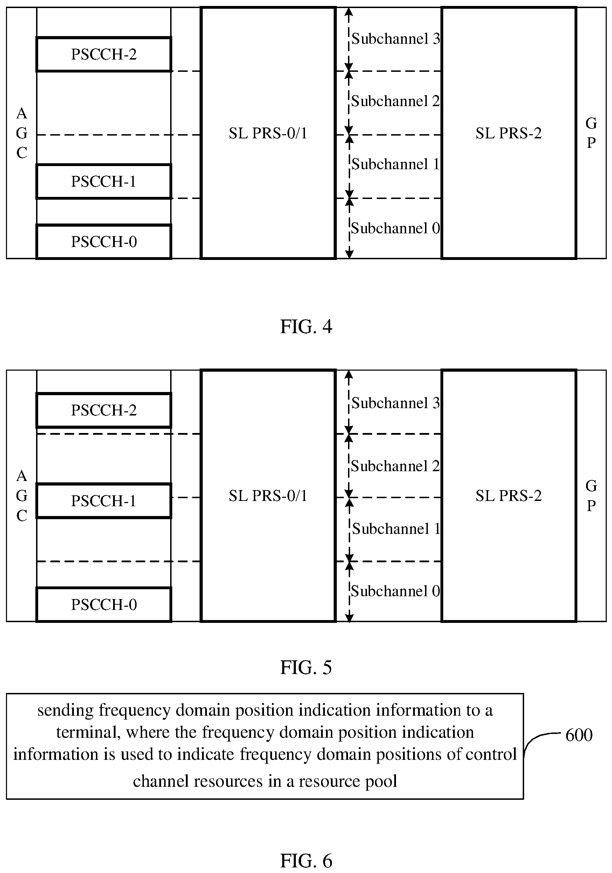

FIG. 4 is a third exemplary diagram of the structure of the dedicated resource pool according to the embodiments of the present disclosure. As shown in FIG. 4, the terminal is pre-configured with the dedicated resource pool for SL positioning. FIG. 4 illustrates the structure of PSCCH resources and SL PRS resources in one time slot. It includes N PSCCH resources and N SL PRS resources, where N=3. AGC stands for Automatic Gain Control, and GP stands for Guard Period. A bandwidth of the dedicated resource pool is M=4 subchannels, namely, subchannel 0, subchannel 1, subchannel 2, and subchannel 3 as shown in FIG. 4.

A system predefines that, in one time slot, PSCCH resources and SL PRS resources have a one-to-one correspondence. Namely, PSCCH resource i is associated with SL PRS resource i, where i = 0, 1, ..., N-1. Furthermore, a bitmap is used to indicate frequency domain positions of the PSCCH resources in the dedicated resource pool. A length of the bitmap is equal to the quantity of subchannels of the dedicated resource pool. For example, the dedicated resource pool in FIG. 4 includes 4 subchannels, and the length of the bitmap is 4. A subchannel including a PSCCH resource is denoted by 1, and the subchannel without a PSCCH resource is denoted by 0. For example, a bitmap "1101" indicates the presence of PSCCH resource in subchannel 0, subchannel 1, and subchannel 3. A frequency domain start position of each PSCCH resource is aligned with a start boundary of the corresponding subchannel.

Another implementation is that the length of the bitmap is equal to the quantity of PRBs in the dedicated resource pool. The bitmap indicates a PRB where a frequency domain start position of each PSCCH resource is located, and the frequency domain start position is aligned with a start boundary of the PRB.

The terminal determines the quantity N of SL PRS resources in one time slot based on configuration information of the dedicated resource pool. In addition, frequency domain positions of N PSCCH resources are determined based on the bitmap information. The terminal obtains SCI through blind detection on the PSCCH resource. It is assumed that the terminal detects SCI in PSCCH resource 1, and determines that the associated resource is SL PRS resource 1, and the SCI is used for scheduling SL PRS resource 1.

Example 4: Frequency domain position indication information indicates frequency domain positions of control channel resources.

FIG. 5 is a fourth exemplary diagram of the structure of the dedicated resource pool according to the embodiments of the present disclosure. As shown in FIG. 5, the terminal is pre-configured with the dedicated resource pool for SL positioning. FIG. 5 illustrates the structure of PSCCH resources and SL PRS resources in one time slot. It includes N PSCCH resources and N SL PRS resources, where N=3. AGC stands for Automatic Gain Control, and GP stands for Guard Period. A bandwidth of the dedicated resource pool is M=4 subchannels, namely, subchannel 0, subchannel 1, subchannel 2, and subchannel 3 as shown in FIG. 5.

A system predefines that, in one time slot, PSCCH resources and SL PRS resources have a one-to-one correspondence. Namely, PSCCH resource i is associated with SL PRS resource i, where i = 0, 1, ..., N-1. Furthermore, signaling is used to indicate frequency domain positions of the PSCCH resources in the dedicated resource pool. For example, a start subcarrier position of each of the N PSCCH resources is indicated, e.g., a start subcarrier position of PSCCH resource 0 is indicated as $F_0$, a start subcarrier position of PSCCH resource 1 is indicated as $F_1$, and so on; or a subchannel position of each of the N PSCCH resources is indicated, or a start PRB position of each of the N PSCCH resources is indicated.

The terminal determines the quantity N of SL PRS resources in one time slot based on configuration information of the dedicated resource pool. In addition, the frequency domain positions of the N PSCCH resources are determined according to the configuration of the signaling. The terminal obtains SCI through blind detection on the PSCCH resource. It is assumed that the terminal detects SCI in PSCCH resource 1, and determines that the associated resource is SL PRS resource 1, and the SCI is used for scheduling SL PRS resource 1.

FIG. 6 is a flow chart of a method for indicating information according to the embodiments of the present disclosure, as shown in FIG. 6, the method includes the following steps.

Step 600, sending frequency domain position indication information to a terminal, where the frequency domain position indication information is used to indicate frequency domain positions of control channel resources in the resource pool.

Specifically, the entity for executing the information indication method may be any communication device, such as a network device, a head terminal in a sidelink system, etc., which is particularly defined herein.

The communication device may transmit the frequency domain position indication information to the terminal, and the frequency domain position indication information may be used to indicate the frequency domain positions of the control channel resources in the resource pool. Hence, after the terminal receives the frequency domain position indication information, it may determine the frequency domain positions of the control channel resources in the resource pool according to the frequency domain position indication information.

In the information indication method of the embodiments of the present disclosure, it is able to assist the terminal in determining the target control channel resource and/or target SL PRS resource and avoid collision and interference between SL PRS resources of different terminals by sending frequency domain position indication information to the terminal to indicate the frequency domain positions of the control channel resources in the resource pool.

In some embodiments, the frequency domain position indication information includes a bitmap, the bitmap is used to indicate frequency domain positions of N control channel resources in the resource pool, and N is the quantity of control channel resources in the resource pool.

Specifically, the frequency domain position indication information may be in the form of a bitmap, and the frequency domain positions of the N control channel resources in the resource pool are indicated by multiple bits in the bitmap.

For example, the communication device may determine the quantity N of control channel resources in the resource pool, and indicate the frequency domain positions of the N control channel resources to the terminal through a bitmap. For another example, the communication device may determine the quantity N of control channel resources in the resource pool based on the quantity of SL PRS resources in the resource pool, and indicate the frequency domain positions of the N control channel resources to the terminal through a bitmap.

In some embodiments, a length of the bitmap is equal to the quantity of frequency domain units in the resource pool, and each bit in the bitmap is used to indicate whether a frequency domain unit corresponding to the bit includes a control channel resource or does not include a control channel resource.

For example, it is assumed that a length of a bitmap is equal to the quantity of subchannels in the resource pool, and the resource pool includes 4 subchannels, the length of the bitmap is 4. A subchannel including a control channel resource is denoted by 1, and the subchannel without a control channel resource is denoted by 0. Correspondingly, a bit with a value of 1 in the bitmap indicates that a frequency domain unit corresponding to the bit includes a control channel resource, and the bit with a value of 0 in the bitmap indicates that the frequency domain unit corresponding to the bit does not include a control channel resource.

In some embodiments, when a first bit in the bitmap indicates that a second frequency domain unit corresponding to the first bit includes a control channel resource, the first bit is further used to indicate that a frequency domain start position of the control channel resource in the second frequency domain unit is located at a start boundary of the second frequency domain unit.

For example, it is assumed that the resource pool includes 4 subchannels, a subchannel with a control channel resource is denoted by 1, and a subchannel without a control channel resource is denoted by 0. A bitmap of "1011" is used to indicate that subchannel 0, subchannel 2 and subchannel 3 each include a control channel resource. The terminal may determine that three control channel resources in the resource pool are located in subchannel 0, subchannel 2 and subchannel 3 respectively according to the bit map, and further determine that a frequency domain start position of each control channel resource is aligned with a start boundary of the subchannel where each control channel resource is located.

In some embodiments, the frequency domain position indication information includes frequency domain position information of N control channel resources in the resource pool, and N is the quantity of control channel resources in the resource pool.

Specifically, the frequency domain position indication information may indicate specific information of the frequency domain position of each control channel resource in the N control channel resources in the resource pool, such as a frequency domain start position, a frequency domain end position, a frequency domain width, and the like.

In some embodiments, the frequency domain location information of the control channel resources includes one or more of following:

> start subcarrier position information of the control channel resources, or
> information of frequency domain units where the control channel resources are located.

For example, a start subcarrier position of each of the N control channel resources may be indicated, e.g., a start subcarrier position of control channel resource 0 is indicated as $F_0$, a start subcarrier position of control channel resource 1 is indicated as $F_1$, and so on. For another example, a subchannel where each of the N control channel resources is located (or a start subchannel of the control channel resource) may be indicated, or a PRB where each of the N control channel resources is located (or a start PRB of the control channel resource) may be indicated, and so on.

In some embodiments, when the frequency domain unit where the control channel resource is located is indicated, the terminal may align the frequency domain start position of each control channel resource with a start boundary of the frequency domain unit.

In some embodiments, when a start frequency domain unit of the control channel resource is indicated, the terminal may align the frequency domain start position of each control channel resource with a start boundary of the start frequency domain unit.

The methods in the various embodiments of the present disclosure are based on the same application concept, so reference may be made to each other for implementations of the methods, the repetition of which is not elaborated again herein.

The methods and apparatus in the various embodiments of the present disclosure are based on the same application concept. Since the principles of solving problems in the methods and the apparatus are similar, reference may be made to each other for implementations of the apparatus and the methods, the repetition of which is not elaborated again herein.

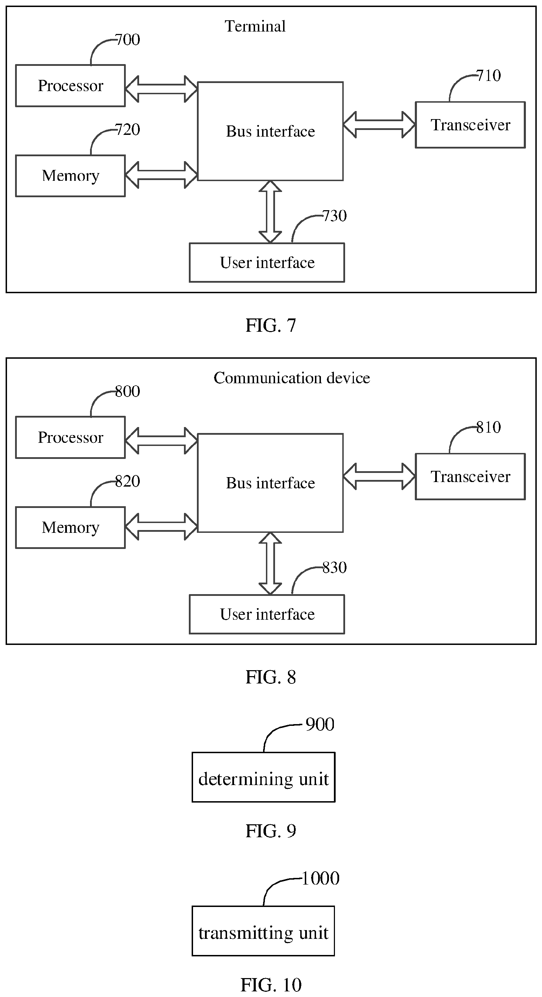

FIG. 7 is a schematic structural diagram of a terminal according to the embodiments of the present disclosure, as shown in FIG. 7, the terminal includes a memory 720, a transceiver 710 and a processor 700. The processor 700 and the memory 720 may be physically arranged separately.

The memory 720 is configured to store a computer program. The transceiver 710 is configured to transmit and receive data under the control of the processor 700.

In specific, the transceiver 710 is used to receive and transmit data under the control of the processor 700.

In FIG. 7, a bus architecture may include any quantity of interconnected buses and bridges. Various circuits including one or more processors represented by the processor 700 and a memory represented by the memory 720 are linked. The bus architecture may further link various other circuits together, such as a periphery component, a voltage stabilizer and a power management circuit, which are known in the art and are not further described herein. A bus interface provides an interface. The transceiver 710 may be multiple elements, i.e., including a transmitter and a receiver, providing a unit for communicating with various other devices on transmission media. The transmission media include a wireless channel, a wired channel, an optical cable, or other transmission media. For different user equipments, the user interface 730 may be an interface capable of connecting externally and internally with the required equipment. The connected equipment includes but not limited to a keypad, a display, a speaker, a microphone, a joystick, etc.

The processor 700 is in charge of managing the bus architecture and common processes. The memory 720 may store data used by the processor 700 in performing operations.

The processor 700 may be a central processing device (CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor 700 may adopt a multi-core architecture.

The processor 710 is configured to execute any of the methods in the embodiments of the present application according to obtained executable instructions by calling the program instructions stored in the memory 720, e.g., determining, based on an association relationship between control channel resources and sidelink Positioning Reference Signal (SL PRS) resources in a resource pool, a target control channel resource and/or a target SL PRS resource.

In some embodiments, the association relationship between the control channel resources and the SL PRS resources in the resource pool includes:

a one-to-one correspondence between the control channel resources and the SL PRS resources in the resource pool; or,
a one-to-one correspondence between the control channel resources and SL PRS resource sets in the resource pool.

In some embodiments, the SL PRS resources are associated with frequency domain positions of the control channel resources; or, SL PRS resource sets are associated with frequency domain positions of the control channel resources.

In some embodiments, frequency domain positions of the control channel resources in the resource pool meet one or more of following:

the frequency domain positions of the control channel resources in the resource pool being uniformly distributed in a bandwidth of the resource pool; or frequency domain positions of the control channel resources in the resource pool being located at boundaries of frequency domain units.

In some embodiments, a quantity of the control channel resources in the resource pool is determined based on a quantity of the SL PRS resources in the resource pool or a quantity of SL PRS resource sets in the resource pool; or,
a quantity of the SL PRS resources in the resource pool or a quantity of SL PRS resource sets in the resource pool is determined based on a quantity of the control channel resources in the resource pool.

In some embodiments, the frequency domain positions of the control channel resources in the resource pool are respectively determined based on a quantity of resources in the resource pool, the bandwidth of the resource pool and a frequency domain start position of the resource pool.

The quantity of resources in the resource pool includes the quantity of SL PRS resources in the resource pool, the quantity of SL PRS resource sets in the resource pool, or the quantity of the control channel resources in the resource pool.

In some embodiments, the frequency domain positions of the control channel resources in the resource pool are respectively determined based on a first formula, and the first formula includes:

$$F(i) = F0 + i * \frac{BW}{N}; \; i = 0, 1, \dots, N - 1$$

where F(i) represents a frequency domain start position of a control channel resource i, F0 represents the frequency domain start position of the resource pool, BW represents the bandwidth of the resource pool, and N represents the quantity of resources in the resource pool.

In some embodiments, the method further includes:
adjusting, after determining the frequency domain start positions of the control channel resources respectively in the resource pool based on the first formula, the frequency domain start positions of the control channel resources in the resource pool respectively to boundaries of the frequency domain units.

In some embodiments, the adjusting the frequency domain start positions of the control channel resources in the resource pool respectively to boundaries of the frequency domain units includes:

adjusting a frequency domain start position of a first control channel resource in the resource pool to a closest boundary of a frequency domain unit to a frequency domain position of the first control channel resource; or,
determining a first frequency domain unit where a frequency domain position of a first control channel resource in the resource pool is located, and adjusting a frequency domain start position of the first control channel resource to a boundary of the first frequency domain unit.

In some embodiments, frequency domain positions of the control channel resources in the resource pool are determined based on received frequency domain position indication information.

In some embodiments, the frequency domain position indication information includes a bitmap, the bitmap is used to indicate frequency domain positions of N control channel resources in the resource pool, and N is the quantity of control channel resources in the resource pool.

In some embodiments, a length of the bitmap is equal to the quantity of frequency domain units in the resource pool, and each bit in the bitmap is used to indicate whether a frequency domain unit corresponding to the bit includes a control channel resource or does not include a control channel resource.

In some embodiments, when a first bit in the bitmap indicates that a second frequency domain unit corresponding to the first bit includes a control channel resource, the first bit is further used to indicate that a frequency domain start position of the control channel resource in the second frequency domain unit is located at a start boundary of the second frequency domain unit.

In some embodiments, the frequency domain position indication information includes frequency domain position information of N control channel resources in the resource pool, and N is the quantity of control channel resources in the resource pool.

In some embodiments, the frequency domain location information of the control channel resources includes one or more of following:

> start subcarrier position information of the control channel resources, or
> information of frequency domain units where the control channel resources are located.

FIG. 8 is a schematic structural diagram of a communication device according to the embodiments of the present disclosure, as shown in FIG. 8, the communication device includes a memory 820, a transceiver 810 and a processor 800. The processor 800 and the memory 820 may be physically arranged separately.

The memory 820 is configured to store a computer program. The transceiver 810 is configured to transmit and receive data under the control of the processor 800.

In specific, the transceiver 810 is used to receive and transmit data under the control of the processor 800.

In FIG. 8, a bus architecture may include any quantity of interconnected buses and bridges. Various circuits including one or more processors represented by the processor 800 and a memory represented by the memory 820 are linked. The bus architecture may further link various other circuits together, such as a periphery component, a voltage stabilizer and a power management circuit, which are known in the art and are not further described herein. A bus interface provides an interface. The transceiver 810 may be multiple elements, i.e., including a transmitter and a receiver, providing a unit for communicating with various other devices on transmission media. The transmission media include a wireless channel, a wired channel, an optical cable, or other transmission media.

The processor 800 is in charge of managing the bus architecture and common processes. The memory 820 may store data used by the processor 800 in performing operations.

The processor 800 may be a CPU, ASIC, FPGA, or CPLD, or the processor 800 may adopt a multi-core architecture.

The processor 810 is configured to execute any of the methods in the embodiments of the present application according to obtained executable instructions by calling the program instructions stored in the memory 820, e.g., sending frequency domain position indication information to a terminal, where the frequency domain position indication information is used to indicate frequency domain positions of control channel resources in the resource pool.

In some embodiments, the frequency domain position indication information includes a bitmap, the bitmap is used to indicate frequency domain positions of N control channel resources in the resource pool, and N is the quantity of control channel resources in the resource pool.

In some embodiments, a length of the bitmap is equal to the quantity of frequency domain units in the resource pool, and each bit in the bitmap is used to indicate whether a frequency domain unit corresponding to the bit includes a control channel resource or does not include a control channel resource.

In some embodiments, when a first bit in the bitmap indicates that a second frequency domain unit corresponding to the first bit includes a control channel resource, the first bit is further used to indicate that a frequency domain start position of the control channel resource in the second frequency domain unit is located at a start boundary of the second frequency domain unit.

In some embodiments, the frequency domain position indication information includes frequency domain position information of N control channel resources in the resource pool, and N is the quantity of control channel resources in the resource pool.

In some embodiments, the frequency domain location information of the control channel resources includes one or more of following:

> start subcarrier position information of the control channel resources, or
> information of frequency domain units where the control channel resources are located.

It should be noted that the above terminal and communication device in the embodiments of the present disclosure are capable of implementing all method steps implemented in the above method embodiments, and are capable of achieving the same technical effects. Therefore, the description and beneficial effects of these embodiments that are the same as those of the method embodiments, which will not be elaborated again herein.

FIG. 9 is a schematic structural diagram of an apparatus for determining resource according to the embodiments of the present disclosure, as shown in FIG. 9, the apparatus includes
a determining unit 900, configured to determine, based on an association relationship between control channel resources and sidelink Positioning Reference Signal (SL PRS) resources in a resource pool, a target control channel resource and/or a target SL PRS resource.

In some embodiments, the association relationship between the control channel resources and the SL PRS resources in the resource pool includes:

> a one-to-one correspondence between the control channel resources and the SL PRS resources in the resource pool; or,

a one-to-one correspondence between the control channel resources and SL PRS resource sets in the resource pool.

In some embodiments, the SL PRS resources are associated with frequency domain positions of the control channel resources; or, SL PRS resource sets are associated with frequency domain positions of the control channel resources.

In some embodiments, frequency domain positions of the control channel resources in the resource pool meet one or more of following:

the frequency domain positions of the control channel resources in the resource pool being uniformly distributed in a bandwidth of the resource pool; or frequency domain positions of the control channel resources in the resource pool being located at boundaries of frequency domain units.

In some embodiments, a quantity of the control channel resources in the resource pool is determined based on a quantity of the SL PRS resources in the resource pool or a quantity of SL PRS resource sets in the resource pool; or,

a quantity of the SL PRS resources in the resource pool or a quantity of SL PRS resource sets in the resource pool is determined based on a quantity of the control channel resources in the resource pool.

In some embodiments, the frequency domain positions of the control channel resources in the resource pool are respectively determined based on a quantity of resources in the resource pool, the bandwidth of the resource pool and a frequency domain start position of the resource pool.

The quantity of resources in the resource pool includes the quantity of SL PRS resources in the resource pool, the quantity of SL PRS resource sets in the resource pool, or the quantity of the control channel resources in the resource pool.

In some embodiments, the frequency domain positions of the control channel resources in the resource pool are respectively determined based on a first formula, and the first formula includes:

$$F(i) = F0 + i * \frac{BW}{N}; \; i = 0, 1, ..., N - 1$$

where F(i) represents a frequency domain start position of a control channel resource i, F0 represents the frequency domain start position of the resource pool, BW represents the bandwidth of the resource pool, and N represents the quantity of resources in the resource pool.

In some embodiments, the apparatus further includes:

an adjusting unit, configured to adjust, after determining the frequency domain start positions of the control channel resources respectively in the resource pool based on the first formula, the frequency domain start positions of the control channel resources in the resource pool respectively to boundaries of the frequency domain units.

In some embodiments, adjusting the frequency domain start positions of the control channel resources in the resource pool respectively to boundaries of the frequency domain units includes:

adjusting a frequency domain start position of a first control channel resource in the resource pool to a closest boundary of a frequency domain unit to a frequency domain position of the first control channel resource; or,

determining a first frequency domain unit where a frequency domain position of a first control channel resource in the resource pool is located, and adjusting a frequency domain start position of the first control channel resource to a boundary of the first frequency domain unit.

In some embodiments, frequency domain positions of the control channel resources in the resource pool are determined based on received frequency domain position indication information.

In some embodiments, the frequency domain position indication information includes a bitmap, the bitmap is used to indicate frequency domain positions of N control channel resources in the resource pool, and N is the quantity of control channel resources in the resource pool.

In some embodiments, a length of the bitmap is equal to the quantity of frequency domain units in the resource pool, and each bit in the bitmap is used to indicate whether a frequency domain unit corresponding to the bit includes a control channel resource or does not include a control channel resource.

In some embodiments, when a first bit in the bitmap indicates that a second frequency domain unit corresponding to the first bit includes a control channel resource, the first bit is further used to indicate that a frequency domain start position of the control channel resource in the second frequency domain unit is located at a start boundary of the second frequency domain unit.

In some embodiments, the frequency domain position indication information includes frequency domain position information of N control channel resources in the resource pool, and N is the quantity of control channel resources in the resource pool.

In some embodiments, the frequency domain location information of the control channel resources includes one or more of following:

start subcarrier position information of the control channel resources, or
information of frequency domain units where the control channel resources are located.

FIG. 10 is a schematic structural diagram of an apparatus for indicating information according to the embodiments of the present disclosure, as shown in FIG. 10, the apparatus includes
a sending unit 1000, configured to transmit frequency domain position indication information to a terminal, where the frequency domain position indication information is used to indicate frequency domain positions of control channel resources in the resource pool.

In some embodiments, the frequency domain position indication information includes a bitmap, the bitmap is used to indicate frequency domain positions of N control channel resources in the resource pool, and N is the quantity of control channel resources in the resource pool.

In some embodiments, a length of the bitmap is equal to the quantity of frequency domain units in the resource pool, and each bit in the bitmap is used to indicate whether a frequency domain unit corresponding to the bit includes a control channel resource or does not include a control channel resource.

In some embodiments, when a first bit in the bitmap indicates that a second frequency domain unit corresponding to the first bit includes a control channel resource, the first bit is further used to indicate that a frequency domain start position of the control channel resource in the second frequency domain unit is located at a start boundary of the second frequency domain unit.

In some embodiments, the frequency domain position indication information includes frequency domain position information of N control channel resources in the resource pool, and N is the quantity of control channel resources in the resource pool.

In some embodiments, the frequency domain location information of the control channel resources includes one or more of following:

start subcarrier position information of the control channel resources, or
information of frequency domain units where the control channel resources are located.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the prior art, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

It should be noted that the above apparatuses in the embodiments of the present disclosure are capable of implementing all method steps implemented in the above method embodiments, and are capable of achieving the same technical effects. The description and beneficial effects of these embodiments that are the same as those of the method embodiments, which will not be elaborated again herein.

In another aspect, the embodiments of the present disclosure further provide a non-transitory readable storage medium, the non-transitory readable storage medium stores a computer program, and the computer program is configured to cause a processor to perform the methods in the above-mentioned embodiments.

It should be noted that the non-transitory readable storage medium in the embodiments of the present disclosure is capable of implementing all method steps implemented in the above method embodiments, and is capable of achieving the same technical effects. The description and beneficial effects of these embodiments that are the same as those of the method embodiments, which will not be elaborated again herein.

The non-transitory readable storage medium may be any available medium or data storage device that a computer may access, including but not limited to a magnetic memory (such as a floppy disk, a hard disk, a magnetic tape, a magneto-optical disk (MO), etc.), an optical memory (such as a CD, a DVD, a BD, a HVD, etc.), or a semiconductor memory (such as a ROM, an EPROM, an EEPROM, a non-volatile memory (NAND FLASH), a solid-state drive (SSD), etc.).

The technical solutions in the embodiments of the present disclosure may be applied to various systems, especially 5G systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5GS), etc.

The terminal involved in the embodiments of the present disclosure may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal device may communicate with one or more core networks (Core Network, CN) through a radio access network (Radio Access Network, RAN). The wireless terminal device may be a mobile terminal device, such as a mobile phone (or referred to as a "cellular" phone) or a computer with a mobile terminal device, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal device may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device), which is not limited in the embodiments of the present disclosure.

The network device involved in the embodiments of the present disclosure may be a base station, and the base station may have multiple cells providing services for terminals. According to different application scenarios, the base station may also be referred to as an access point, or may be a device in an access network that communicates with wireless terminal devices through one or more sectors on air interfaces, or may have other names. The network device may be configured to exchange received air frames and Internet protocol (Internet Protocol, IP) packets, serving as a router between the wireless terminal devices and rest of the access network, where the rest of the access network may include an Internet Protocol (IP) communication network. The network device may also coordinate attribute management of air interfaces. For example, the network device involved in the embodiments of the present disclosure may be a network device (Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB), a relay node (relay node), a femto (femto), a pico (pico), etc., which is not limited in the embodiments of the present disclosure. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2D-MIMO, 3D-MIMO, FD-MIMO, or Massive MIMO, or may be diversity transmission, or precoding transmission, or beamforming transmission, etc.

A person skilled in the art should understand that the embodiments of the present disclosure may be provided as methods, systems, or computer program products. Therefore, the present disclosure may adopt the form of complete hardware embodiments, complete software embodiments, or embodiments combining software and hardware aspects. Moreover, the present disclosure may adopt the form of a computer program product implemented on one or more computer available storage media (including but not limited to a disk storage, an optical storage, etc.) containing computer available program code.

The present disclosure is described with reference to flowcharts and/or block diagrams of methods, devices (systems), and computer program products according to the embodiments of the present disclosure. As can be appreciated, each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

Apparently, those skilled in the art may make various modifications and variations to the present disclosure, without departing from the spirit and scope of the present disclosure. In this case, if the modifications and variations of the present disclosure fall within the scope of the claims of the present disclosure and their equivalent techniques, the present disclosure is intended to include these modifications and variations.

## Claims

1. A method for determining resource, applied to a terminal, comprising:
determining, based on an association relationship between control channel resources and sidelink Positioning Reference Signal (SL PRS) resources in a resource pool, a target control channel resource and/or a target SL PRS resource.

2. The method for determining resource according to claim 1, wherein the association relationship between the control channel resources and the SL PRS resources in the resource pool comprises:

a one-to-one correspondence between the control channel resources and the SL PRS resources in the resource pool; or,
a one-to-one correspondence between the control channel resources and SL PRS resource sets in the resource pool.

3. The method for determining resource according to claim 1 or 2, wherein the SL PRS resources are associated with frequency domain positions of the control channel resources; or, SL PRS resource sets are associated with frequency domain positions of the control channel resources.

4. The method for determining resource according to claim 1 or 2, wherein frequency domain positions of the control channel resources in the resource pool meet one or more of following:

the frequency domain positions of the control channel resources in the resource pool being uniformly distributed in a bandwidth of the resource pool; or
the frequency domain positions of the control channel resources in the resource pool being respectively located at boundaries of frequency domain units.

5. The method for determining resource according to claim 1 or 2, wherein a quantity of the control channel resources in the resource pool is determined based on a quantity of the SL PRS resources in the resource pool or a quantity of SL PRS resource sets in the resource pool; or,
a quantity of the SL PRS resources in the resource pool or a quantity of SL PRS resource sets in the resource pool is determined based on a quantity of the control channel resources in the resource pool.

6. The method for determining resource according to claim 4, wherein the frequency domain positions of the control channel resources in the resource pool are respectively determined based on a quantity of resources in the resource pool, the bandwidth of the resource pool and a frequency domain start position of the resource pool;
the quantity of resources in the resource pool comprises the quantity of SL PRS resources in the resource pool, the quantity of SL PRS resource sets in the resource pool, or the quantity of the control channel resources in the resource pool.

7. The method for determining resource according to claim 6, wherein the frequency domain positions of the control channel resources in the resource pool are respectively determined based on a first formula, and the first formula comprises:

$$F(i) = F0 + i * \frac{BW}{N}; \ i = 0, 1, \dots, N-1$$

wherein F(i) represents a frequency domain start position of a control channel resource i, F0 represents the frequency domain start position of the resource pool, BW represents the bandwidth of the resource pool, and N represents the quantity of resources in the resource pool.

8.  The method for determining resource according to claim 7, further comprising:
    adjusting, after determining the frequency domain start positions of the control channel resources respectively in the resource pool based on the first formula, the frequency domain start positions of the control channel resources in the resource pool respectively to the boundaries of the frequency domain units.

9.  The method for determining resource according to claim 8, wherein the adjusting the frequency domain start positions of the control channel resources in the resource pool respectively to the boundaries of the frequency domain units comprises:

    adjusting a frequency domain start position of a first control channel resource in the resource pool to a closest boundary of a frequency domain unit to a frequency domain position of the first control channel resource; or,
    determining a first frequency domain unit where a frequency domain position of a first control channel resource in the resource pool is located, and adjusting a frequency domain start position of the first control channel resource to a boundary of the first frequency domain unit.

10. The method for determining resource according to claim 1 or 2, wherein frequency domain positions of the control channel resources in the resource pool are determined based on frequency domain position indication information received.

11. The method for determining resource according to claim 10, wherein the frequency domain position indication information comprises a bitmap, the bitmap is used to indicate frequency domain positions of N control channel resources in the resource pool, and N is a quantity of the control channel resources in the resource pool.

12. The method for determining resource according to claim 11, wherein a length of the bitmap is a quantity of frequency domain units in the resource pool, and each bit in the bitmap is used to indicate whether a frequency domain unit corresponding to the bit comprises a control channel resource or does not comprise a control channel resource.

13. The method for determining resource according to claim 12, wherein in a case where a first bit in the bitmap indicates that a second frequency domain unit corresponding to the first bit comprises a control channel resource, the first bit is further used to indicate that a frequency domain start position of the control channel resource in the second frequency domain unit is located at a start boundary of the second frequency domain unit.

14. The method for determining resource according to claim 10, wherein the frequency domain position indication information comprises frequency domain position information of N control channel resources in the resource pool, and N is a quantity of the control channel resources in the resource pool.

15. The method for determining resource according to claim 14, wherein the frequency domain location information of the control channel resources comprises one or more of following:

    start subcarrier position information of the control channel resources; or
    information of frequency domain units where the control channel resources are located.

16. An information indication method, comprising:
    sending frequency domain position indication information to a terminal, wherein the frequency domain position indication information is used to indicate frequency domain positions of control channel resources in a resource pool.

17. The information indication method according to claim 16, wherein the frequency domain position indication information comprises a bitmap, the bitmap is used to indicate frequency domain positions of N control channel resources in the resource pool, and N is a quantity of the control channel resources in the resource pool.

18. The information indication method according to claim 17, wherein a length of the bitmap is a quantity of frequency domain units in the resource pool, and each bit in the bitmap is used to indicate whether a frequency domain unit corresponding to the bit comprises a control channel resource or does not comprise a control channel resource.

19. The information indication method according to claim 18, wherein in a case where a first bit in the bitmap indicates that a second frequency domain unit corresponding to the first bit comprises a control channel resource, the first bit is further used to indicate that a frequency domain start position of the control channel resource in the second frequency domain unit is located at a start boundary of the second frequency domain unit.

20. The information indication method according to claim 16, wherein the frequency domain position indication information comprises frequency domain position information of N control channel resources in the resource pool, and N is a quantity of the control channel resources in the resource pool.

21. The information indication method according to claim 20, wherein the frequency domain location information of the control channel resources comprises one or more of following:

> start subcarrier position information of the control channel resources; or
> information of frequency domain units where the control channel resources are located.

22. A terminal, comprising: a memory, a transceiver and a processor, wherein,

> the memory is configured to store a computer program;
> the transceiver is configured to transmit and receive data under the control of the processor;
> the processor is configured to read the computer program in the memory to perform the following operations:
> determining, based on an association relationship between control channel resources and sidelink Positioning Reference Signal (SL PRS) resources in a resource pool, a target control channel resource and/or a target SL PRS resource.

23. The terminal according to claim 22, wherein the association relationship between the control channel resources and the SL PRS resources in the resource pool comprises:

> a one-to-one correspondence between the control channel resources and the SL PRS resources in the resource pool; or,
> a one-to-one correspondence between the control channel resources and SL PRS resource sets in the resource pool.

24. The terminal according to claim 22 or 23, wherein the SL PRS resources are associated with frequency domain positions of the control channel resources; or, SL PRS resource sets are associated with frequency domain positions of the control channel resources.

25. The terminal according to claim 22 or 23, wherein frequency domain positions of the control channel resources in the resource pool meet one or more of following:

> the frequency domain positions of the control channel resources in the resource pool being uniformly distributed in a bandwidth of the resource pool; or
frequency domain positions of the control channel resources in the resource pool being respectively located at boundaries of frequency domain units.

26. The terminal according to claim 22 or 23, wherein a quantity of the control channel resources in the resource pool is determined based on a quantity of the SL PRS resources in the resource pool or a quantity of SL PRS resource sets in the resource pool; or, a quantity of the SL PRS resources in the resource pool or a quantity of SL PRS resource sets in the resource pool is determined based on a quantity of the control channel resources in the resource pool.

27. The terminal according to claim 25, wherein the frequency domain positions of the control channel resources in the resource pool are respectively determined based on a quantity of resources in the resource pool, the bandwidth of the resource pool and a frequency domain start position of the resource pool;
the quantity of resources in the resource pool comprises the quantity of SL PRS resources in the resource pool, the quantity of SL PRS resource sets in the resource pool, or the quantity of the control channel resources in the resource pool.

28. The terminal according to claim 27, wherein the frequency domain positions of the control channel resources in the resource pool are respectively determined based on a first formula, and the first formula comprises:

$$F(i) = F0 + i * \frac{BW}{N}; \ i = 0, 1, \ldots, N - 1$$

wherein F(i) represents a frequency domain start position of a control channel resource i, F0 represents the frequency domain start position of the resource pool, BW represents the bandwidth of the resource pool, and N represents the quantity of resources in the resource pool.

29. The terminal according to claim 28, wherein the operations further comprise:
adjusting, after determining the frequency domain start positions of the control channel resources respectively in the resource pool based on the first formula, the frequency domain start positions of the control channel resources in the resource pool respectively to boundaries of the frequency domain units.

30. The terminal according to claim 29, wherein the adjusting the frequency domain start positions of the control channel resources in the resource pool respectively to boundaries of the frequency domain units comprises:

adjusting a frequency domain start position of a first control channel resource in the resource pool to a closest boundary of a frequency domain unit to a frequency domain position of the first control channel resource; or, determining a first frequency domain unit where a frequency domain position of a first control channel resource in the resource pool is located, and adjusting a frequency domain start position of the first control channel resource to a boundary of the first frequency domain unit.

31. The terminal according to claim 22 or 23, wherein frequency domain positions of the control channel resources in the resource pool are determined based on frequency domain position indication information received.

32. The terminal according to claim 31, wherein the frequency domain position indication information comprises a bitmap, the bitmap is used to indicate frequency domain positions of N control channel resources in the resource pool, and N is a quantity of the control channel resources in the resource pool.

33. The terminal according to claim 32, wherein a length of the bitmap is a quantity of frequency domain units in the resource pool, and each bit in the bitmap is used to indicate whether a frequency domain unit corresponding to the bit comprises a control channel resource or does not comprise a control channel resource.

34. The terminal according to claim 33, wherein in a case where a first bit in the bitmap indicates that a second frequency domain unit corresponding to the first bit comprises a control channel resource, the first bit is further used to indicate that a frequency domain start position of the control channel resource in the second frequency domain unit is located at a start boundary of the second frequency domain unit.

35. The terminal according to claim 31, wherein the frequency domain position indication information comprises frequency domain position information of N control channel resources in the resource pool, and N is a quantity of the control channel resources in the resource pool.

36. The terminal according to claim 35, wherein the frequency domain location information of the control channel resources comprises one or more of following:

start subcarrier position information of the control channel resources; or information of frequency domain units where the control channel resources are located.

37. A communication device, comprising: a memory, a transceiver and a processor, wherein,

the memory is configured to store a computer program; the transceiver is configured to transmit and receive data under the control of the processor; the processor is configured to read the computer program in the memory to perform the following operations: sending frequency domain position indication information to a terminal, wherein the frequency domain position indication information is used to indicate frequency domain positions of control channel resources in a resource pool.

38. The communication device according to claim 37, wherein the frequency domain position indication information comprises a bitmap, the bitmap is used to indicate frequency domain positions of N control channel resources in the resource pool, and N is a quantity of the control channel resources in the resource pool.

39. The communication device according to claim 38, wherein a length of the bitmap is a quantity of frequency domain units in the resource pool, and each bit in the bitmap is used to indicate whether a frequency domain unit corresponding to the bit comprises a control channel resource or does not comprise a control channel resource.

40. The communication device according to claim 39, wherein in a case where a first bit in the bitmap indicates that a second frequency domain unit corresponding to the first bit comprises a control channel resource, the first bit is further used to indicate that a frequency domain start position of the control channel resource in the second frequency domain unit is located at a start boundary of the second frequency domain unit.

41. The communication device according to claim 37, wherein the frequency domain position indication information comprises frequency domain position information of N control channel resources in the resource pool, and N is a quantity of the control channel resources in the resource pool.

42. The communication device according to claim 41, wherein the frequency domain location information of the control channel resources comprises one or more of following:

start subcarrier position information of the control channel resources; or
information of frequency domain units where the control channel resources are located.

43. An apparatus for determining resourceAn apparatus for determining resources, comprising:
a determining unit, configured to determine, based on an association relationship between control channel resources and sidelink Positioning Reference Signal (SL PRS) resources in a resource pool, a target control channel resource and/or a target SL PRS resource.

44. The resource determination apparatus according to claim 43, wherein the association relationship between the control channel resources and the SL PRS resources in the resource pool comprises:

a one-to-one correspondence between the control channel resources and the SL PRS resources in the resource pool; or,
a one-to-one correspondence between the control channel resources and SL PRS resource sets in the resource pool.

45. The resource determination apparatus according to claim 43 or 44, wherein the SL PRS resources are associated with frequency domain positions of the control channel resources; or, SL PRS resource sets are associated with frequency domain positions of the control channel resources.

46. The resource determination apparatus according to claim 43 or 44, wherein frequency domain positions of the control channel resources in the resource pool meet one or more of following:

the frequency domain positions of the control channel resources in the resource pool being uniformly distributed in a bandwidth of the resource pool; or
the frequency domain positions of the control channel resources in the resource pool being located at boundaries of frequency domain units.

47. The resource determination apparatus according to claim 43 or 44, wherein a quantity of the control channel resources in the resource pool is determined based on a quantity of the SL PRS resources in the resource pool or a quantity of SL PRS resource sets in the resource pool; or,
a quantity of the SL PRS resources in the resource pool or a quantity of SL PRS resource sets in the resource pool is determined based on a quantity of the control channel resources in the resource pool.

48. The resource determination apparatus according to claim 46, wherein the frequency domain positions of the control channel resources in the resource pool are respectively determined based on a quantity of resources in the resource pool, the bandwidth of the resource pool and a frequency domain start position of the resource pool;
the quantity of resources in the resource pool comprises the quantity of SL PRS resources in the resource pool, the quantity of SL PRS resource sets in the resource pool, or the quantity of the control channel resources in the resource pool.

49. The resource determination apparatus according to claim 48, wherein the frequency domain positions of the control channel resources in the resource pool are respectively determined based on a first formula, and the first formula comprises:

$$F(i) = F0 + i * \frac{BW}{N}; \; i = 0, 1, ..., N-1$$

wherein F(i) represents a frequency domain start position of a control channel resource i, F0 represents the frequency domain start position of the resource pool, BW represents the bandwidth of the resource pool, and N represents the quantity of resources in the resource pool.

50. The resource determination apparatus according to claim 49, further comprising:
an adjusting unit, configured to adjust, after determining the frequency domain start positions of the control channel resources respectively in the resource pool based on the first formula, the frequency domain start positions of the control channel resources in the resource pool respectively to boundaries of the frequency domain units.

51. The resource determination apparatus according to claim 50, wherein adjusting the frequency domain start positions of the control channel resources in the resource pool respectively to boundaries of the frequency domain units comprises:

adjusting a frequency domain start position of a first control channel resource in the resource pool to a closest boundary of a frequency domain unit to a frequency domain position of the first control channel resource; or,
determining a first frequency domain unit where a frequency domain position of a first control channel resource in the resource pool is located, and adjusting a frequency domain start position of the first control channel resource to a boundary of the first frequency domain unit.

52. The resource determination apparatus according to claim 43 or 44, wherein frequency domain positions of the control channel resources in the resource pool are determined based on frequency domain position indication information received.

53. The resource determination apparatus according to claim 52, wherein the frequency domain position indication information comprises a bitmap, the bitmap is used to indicate frequency domain positions of N control channel resources in the resource pool, and N is a quantity of the control channel resources in the resource pool.

54. The resource determination apparatus according to claim 53, wherein a length of the bitmap is a quantity of frequency domain units in the resource pool, and each bit in the bitmap is used to indicate whether a frequency domain unit corresponding to the bit comprises a control channel resource or does not comprise a control channel resource.

55. The resource determination apparatus according to claim 54, wherein in a case where a first bit in the bitmap indicates that a second frequency domain unit corresponding to the first bit comprises a control channel resource, the first bit is further used to indicate that a frequency domain start position of the control channel resource in the second frequency domain unit is located at a start boundary of the second frequency domain unit.

56. The resource determination apparatus according to claim 52, wherein the frequency domain position indication information comprises frequency domain position information of N control channel resources in the resource pool, and N is a quantity of the control channel resources in the resource pool.

57. The resource determination apparatus according to claim 56, wherein the frequency domain location information of the control channel resources comprises one or more of following:

    start subcarrier position information of the control channel resources; or
    information of frequency domain units where the control channel resources are located.

58. An apparatus for indicating information, comprising: a sending unit, configured to send frequency domain position indication information to a terminal, wherein the frequency domain position indication information is used to indicate frequency domain positions of control channel resources in a resource pool.

59. The information indication apparatus according to claim 58, wherein the frequency domain position indication information comprises a bitmap, the bitmap is used to indicate frequency domain positions of N control channel resources in the resource pool, and N is a quantity of the control channel resources in the resource pool.

60. The information indication apparatus according to claim 59, wherein a length of the bitmap is equal to the quantity of frequency domain units in the resource pool, and each bit in the bitmap is used to indicate whether a frequency domain unit corresponding to the bit comprises a control channel resource or does not comprise a control channel resource.

61. The information indication apparatus according to claim 60, wherein in a case where a first bit in the bitmap indicates that a second frequency domain unit corresponding to the first bit comprises a control channel resource, the first bit is further used to indicate that a frequency domain start position of the control channel resource in the second frequency domain unit is located at a start boundary of the second frequency domain unit.

62. The information indication apparatus according to claim 58, wherein the frequency domain position indication information comprises frequency domain position information of N control channel resources in the resource pool, and N is a quantity of the control channel resources in the resource pool.

63. The information indication apparatus according to claim 62, wherein the frequency domain location information of the control channel resources comprises one or more of following:

    start subcarrier position information of the control channel resources; or
    information of frequency domain units where the control channel resources are located.

64. A non-transitory readable storage medium, wherein the non-transitory readable storage medium stores a computer program, and the computer program is configured to cause a processor to perform the method according to any one of claims 1 to 15.

65. A non-transitory readable storage medium, wherein the non-transitory readable storage medium stores a computer program, and the computer program is configured to cause a processor to perform the method according to any one of claims 16 to 21.

determining, based on an association relationship between control channel resources and sidelink Positioning Reference Signal (SL PRS) resources in a resource pool, a target control channel resource and/or a target SL PRS resource

~ 100

FIG. 1

FIG. 2

FIG. 3

| A G C | PSCCH-2 | | SL PRS-0/1 | Subchannel 3 | SL PRS-2 | G P |
|---|---|---|---|---|---|---|
| | | | | Subchannel 2 | | |
| | PSCCH-1 | | | Subchannel 1 | | |
| | PSCCH-0 | | | Subchannel 0 | | |

FIG. 4

| A G C | PSCCH-2 | | SL PRS-0/1 | Subchannel 3 | SL PRS-2 | G P |
|---|---|---|---|---|---|---|
| | | | | Subchannel 2 | | |
| | PSCCH-1 | | | Subchannel 1 | | |
| | PSCCH-0 | | | Subchannel 0 | | |

FIG. 5

> sending frequency domain position indication information to a terminal, where the frequency domain position indication information is used to indicate frequency domain positions of control channel resources in a resource pool — 600

FIG. 6

Terminal

Processor 700

Memory 720

Bus interface

Transceiver 710

User interface 730

FIG. 7

Communication device

Processor 800

Memory 820

Bus interface

Transceiver 810

User interface 830

FIG. 8

determining unit 900

FIG. 9

transmitting unit 1000

FIG. 10

## INTERNATIONAL SEARCH REPORT

| International application No. |
|---|
| **PCT/CN2024/111000** |

| A. | CLASSIFICATION OF SUBJECT MATTER |
|---|---|

H04L5/00(2006.01)i; H04W72/40(2023.01)i

According to International Patent Classification (IPC) or to both national classification and IPC

| B. | FIELDS SEARCHED |
|---|---|

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABS, DWPI, VCN, CNKI: sl-prs, SL PRS, 直通链路定位参考信号, pscch, 控制信道, 资源, resource, 频域, 位置, 时频, frequency, location, 资源池, resource pool, 位图, bitmap, 数, number, 映射, mapping, 关联, 相关, association

| C. | DOCUMENTS CONSIDERED TO BE RELEVANT |
|---|---|

| Category* | Citation of document, with indication, where appropriate, of the relevant passages | Relevant to claim No. |
|---|---|---|
| X | RAN1 et al. "RP-231092, Status Report to TSG" *3GPP TSG RAN Meeting #100,* 14 June 2023 (2023-06-14), section 2.1.1.2.4 | 1-9, 22-30, 43-51, 64 |
| Y | RAN1 et al. "RP-231092, Status Report to TSG" *3GPP TSG RAN Meeting #100,* 14 June 2023 (2023-06-14), section 2.1.1.2.4 | 10-15, 31-36, 52-57 |
| X | WO 2019061504 A1 (ZTE CORP.) 04 April 2019 (2019-04-04) description, paragraphs 81-84 | 16, 37, 58, 65 |
| Y | WO 2019061504 A1 (ZTE CORP.) 04 April 2019 (2019-04-04) description, paragraphs 81-84 | 10-15, 17-21, 31-36, 38-42, 52-57, 59-63 |
| Y | US 2021127413 A1 (GUANGDONG OPPO MOBILE TELECOMMUNICATIONS CORP., LTD.) 29 April 2021 (2021-04-29) description, paragraphs 60-69 | 11-15, 17-21, 32-36, 38-42, 53-57, 59-63 |

✓ Further documents are listed in the continuation of Box C.    ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 November 2024** | **22 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/111000** |

### C.    DOCUMENTS CONSIDERED TO BE RELEVANT

| Category* | Citation of document, with indication, where appropriate, of the relevant passages | Relevant to claim No. |
| --- | --- | --- |
| X | CATT et al. "R1-2302710, Further discussion on Resource allocation for SL positioning reference signal"<br>*3GPP TSG RAN WG1 #112bis-e*, 26 April 2023 (2023-04-26),<br>    section 4 | 1-9, 22-30, 43-51, 64 |
| Y | CATT et al. "R1-2302710, Further discussion on Resource allocation for SL positioning reference signal"<br>*3GPP TSG RAN WG1 #112bis-e*, 26 April 2023 (2023-04-26),<br>    section 4 | 10-15, 31-36, 52-57 |

Form PCT/ISA/210 (second sheet) (July 2022)

## INTERNATIONAL SEARCH REPORT
### Information on patent family members

International application No.

**PCT/CN2024/111000**

| Patent document cited in search report | | | Publication date (day/month/year) | Patent family member(s) | | | Publication date (day/month/year) |
|---|---|---|---|---|---|---|---|
| WO | 2019061504 | A1 | 04 April 2019 | CN | 111149401 | A | 12 May 2020 |
| US | 2021127413 | A1 | 29 April 2021 | CA | 3105519 | A1 | 09 January 2020 |
| | | | | BR | 112020027037 | A2 | 30 March 2021 |
| | | | | TW | 202007192 | A | 01 February 2020 |
| | | | | TWI | 805799 | B | 21 June 2023 |
| | | | | US | 2024098749 | A1 | 21 March 2024 |
| | | | | JP | 2023082194 | A | 13 June 2023 |
| | | | | JP | 7544898 | B2 | 03 September 2024 |
| | | | | MX | 2020014103 | A | 09 March 2021 |
| | | | | EP | 4167675 | A1 | 19 April 2023 |
| | | | | WO | 2020006955 | A1 | 09 January 2020 |
| | | | | AU | 2018430965 | A1 | 28 January 2021 |
| | | | | AU | 2018430965 | B2 | 23 May 2024 |
| | | | | ES | 2940127 | T3 | 03 May 2023 |
| | | | | US | 11832260 | B2 | 28 November 2023 |
| | | | | EP | 3806577 | A1 | 14 April 2021 |
| | | | | EP | 3806577 | A4 | 18 August 2021 |
| | | | | EP | 3806577 | B1 | 11 January 2023 |
| | | | | JP | 2021529490 | A | 28 October 2021 |
| | | | | JP | 7262566 | B2 | 21 April 2023 |
| | | | | KR | 20210025670 | A | 09 March 2021 |
| | | | | CN | 112205071 | A | 08 January 2021 |
| | | | | CN | 113015131 | A | 22 June 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311009382X